# EUROPÄISCHE PATENTSCHRIFT

(11) **EP 3 047 355 B1**
(45) Veröffentlichungstag und Bekanntmachung des Hinweises auf die Patenterteilung: **31.01.2018**
(21) Anmeldenummer: 14771513.0
(22) Anmeldetag: 17.09.2014
(51) Int. Cl.: G06F 3/01, B60K 35/00, B60K 37/02, G06F 3/14, G06F 3/0482, G09G 5/14, G06F 3/0484

(54) **VERFAHREN UND SYSTEM ZUM BETREIBEN WENIGSTENS EINER ANZEIGEEINRICHTUNG EINES KRAFTWAGENS SOWIE KRAFTWAGEN MIT EINEM SYSTEM ZUM BETREIBEN WENIGSTENS EINER ANZEIGEEINRICHTUNG**
METHOD AND SYSTEM FOR OPERATING AT LEAST ONE DISPLAY DEVICE OF A MOTOR VEHICLE, AND MOTOR VEHICLE COMPRISING A SYSTEM FOR OPERATING AT LEAST ONE DISPLAY DEVICE
PROCÉDÉ POUR FAIRE FONCTIONNER AU MOINS UN DISPOSITIF D'AFFICHAGE D'UN VÉHICULE AUTOMOBILE ET VÉHICULE AUTOMOBILE ÉQUIPÉ UN SYSTÈME POUR FAIRE FONCTIONNER AU MOINS UN DISPOSITIF D'AFFICHAGE

(30) Priorität: 20.09.2013 DE 102013015634
(43) Veröffentlichungstag der Anmeldung: 27.07.2016
(73) Patentinhaber: Audi AG, 85045 Ingolstadt (DE)
(72) Erfinder: KÜHNE, Marcus, 92331 Beilngries (DE); MÜLLER, Ulrich, 85055 Ingolstadt (DE); SCHNEIDER, Johann, 85139 Wettstetten (DE)
(86) Internationale Anmeldenummer: PCT/EP2014/002513
(87) Internationale Veröffentlichungsnummer: WO 2015/039746

(56) Entgegenhaltungen:
- WO-A2-2012/162060
- DE-A1-102007 026 120
- DE-A1-102007 061 537
- DE-A1-102012 006 966
- US-A1- 2009 312 059

## Beschreibung

Die Erfindung betrifft ein Verfahren und System zum Betreiben wenigstens einer Anzeigeeinrichtung eines Kraftwagens der in den Oberbegriffen der unabhängigen Patentansprüchen angegebenen Art. Des Weiteren betrifft die Erfindung einen Kraftwagen mit einem System zum Betreiben wenigstens einer Anzeigeeinrichtung.

Die DE 10 2007 049 710 A1 zeigt ein Verfahren zum visuellen Auslösen von Vorgängen in einem Kraftfahrzeug. Sobald erfasst worden ist, dass ein Fahrzeuginsasse seinen Blick für eine vorgegebene Dauer auf ein Bedienelement des Kraftfahrzeugs gerichtet hat, wird das Bedienelement automatisch ausgelöst.

Die DE 10 2012 006 966 A1 zeigt ein Verfahren zum Auslösen einer fahrzeugseitig ausführbaren Funktion mittels blickgesteuerten Bedienens durch einen Fahrer des Kraftfahrzeugs. Mittels einer Blickerfassungseinrichtung wird überprüft, ob der Fahrer seinen Blick auf einen bestimmten Bereich einer Anzeigefläche eines Bedienfelds gerichtet hat. Falls eine derartige Blickzuwendung ermittelt worden ist, wird eine zu dem Bedienfeld gehörende fahrzeugseitig ausführbare Funktion ausgeführt. Die Anzeigefläche kann dabei deaktiviert werden, sobald eine Blickabwendung von der entsprechenden Anzeigefläche erfasst worden ist.

Die EP 2 390 139 A1 zeigt ein Verfahren zum blickrichtungsabhängigen Beleuchten von bestimmten Bereichen in einem Fahrzeuginnenraum. Sobald erfasst worden ist, dass ein Fahrer des Kraftwagens einen Blick für eine vorgegeben Dauer auf einen der Bereiche gerichtet hat, wird dieser Bereich beleuchtet. Falls der Fahrer weiterhin auf diesen Bereich für eine vorgegebene Dauer schaut, wird die Beleuchtungsintensität erhöht.

Die EP 1 562 102 A2 zeigt ein Kraftfahrzeug mit einer Funktionsauslösung durch eine Blickauswahl. Ein Bedienelement kann aktiviert werden, sobald eine Blickzuwendung eines Fahrzeuginsassen zu dem Bedienelement erfasst worden ist.

Die DE 10 2007 025 531 A1 zeigt ein blickrichtungsgesteuertes Anzeigesystem und blickrichtungsgesteuertes Anzeigeverfahren für ein Kraftfahrzeug. In Abhängigkeit von einer erfassten Blickrichtungsdauer können dabei jeweils angezeigte Informationen verändert werden.

Das Dokument DE 10 2007 026120 A1 offenbart ein Verfahren zum Steuern eines graphischen Zeigerelements innerhalb wenigstens einer graphischen Nutzerschnittstelle einer Anwendung eines digitalen Bildinformationssystems, bei welchem Blickbewegungen eines Nutzers der wenigstens einen graphischen Nutzerschnittstelle mittels einer Blickbewegungserfassungseinrichtung erfasst werden, die erfassten Blickbewegungen zum Ermitteln einer Blickfixation des Nutzers analysiert werden, ein von einer ermittelten Blickfixation fixiertes Segment der wenigstens einen graphischen Nutzerschnittstelle bestimmt wird und das graphische Zeigerelement innerhalb des von der Blickfixation fixierten Segments der wenigstens einen graphischen Nutzerschnittstelle platziert wird.

Es ist die Aufgabe der vorliegenden Erfindung, die Bedienbarkeit zumindest einer blickrichtungsabhängig steuerbaren Anzeigeeinrichtung zu verbessern.

Diese Aufgabe wird durch ein Verfahren und System zum Betreiben wenigstens einer Anzeigeeinrichtung eines Kraftwagens mit den Merkmalen der unabhängigen Patentansprüche und durch einen Kraftwagen mit einem System zum Betreiben wenigstens einer Anzeigeeinrichtung gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben wenigstens einer Anzeigeeinrichtung eines Kraftwagens wird eine Blickrichtung eines Fahrzeuginsassen des Kraftwagens erfasst und anhand der erfassten Blickrichtung überprüft, ob der Fahrzeuginsasse seinen Blick für zumindest eine vorgegebene Blickzuwendungsdauer auf einen Anzeigebereich der Anzeigeeinrichtung gerichtet hat. Falls der Blick für zumindest die vorgegeben Blickzuwendungsdauer auf den Anzeigebereich der Anzeigeeinrichtung gerichtet worden ist, wird ein Interaktionsmodus aktiviert, bei welchem eine Bedieneinrichtung zum Steuern der Anzeigeeinrichtung aktiviert ist. Das erfindungsgemä-ße Verfahren zeichnet sich dadurch aus, dass nach der Aktivierung des Interaktionsmodus anhand wenigstens eines vorbestimmten Kriteriums ermittelt wird, ob eine Steuerung der Anzeigeeinrichtung abgeschlossen worden ist. Solange kein Abschluss der Steuerung der Anzeigeeinrichtung ermittelt worden oder zumindest ein anderes vorbestimmtes Kriterium noch nicht erfüllt worden ist, wird der Interaktionsmodus aufrechterhalten. Weiterhin ist vorgesehen, dass eine Aktivierung eines weiteren Interaktionsmodus, bei welchem die Bedieneinrichtung oder eine andere Bedieneinrichtung zum Steuern einer weiteren Anzeigeeinrichtung aktiviert ist, nach einer erfassten Blickzuwendung des Fahrzeuginsassen für eine vorgegebene Blickzuwendungsdauer zu einem Anzeigebereich der weiteren Anzeigeeinrichtung um eine vorgegebene Dauer verzögert wird, solange kein Abschluss der Steuerung der Anzeigeeinrichtung erfasst worden ist. Mit anderen Worten erfolgt also erst ein verzögertes Aufschalten des betreffenden Interaktionsmodus der weiteren Bedieneinrichtung bei einer entsprechenden Blickzuwendung, solange kein Abschluss der Steuerung der zuvor in den Interaktionsmodus versetzen Anzeigeeinrichtung erfasst worden ist. Durch diese zeitlich verzögerte Aufschaltung des Interaktionsmodus für die weitere Bedieneinrichtung bei einer entsprechend erfassten detektierten Blickzuwendung wird ein frühzeitiges und gegebenenfalls unerwünschtes Umschalten des Interaktionsmodus von der einen auf die andere Anzeigeeinrichtung unterbunden. Der Erfindung liegt dabei die Erkenntnis zugrunde, dass bei derartigen Anzeigeeinrichtungen, bei welchen blickrichtungsgesteuert ein entsprechender Interaktionsmodus zur Steuerung der Anzeigeeinrichtung aktiviert werden kann, es zum unerwünschten Aufschalten oder auch Deaktivieren des betreffenden Interaktionsmodus kommen kann, wenn beispielsweise eine Blickabwendung des Fahrzeuginsassen von der zuvor aktivierten Anzeigeeinrichtung erfasst wird. Dadurch, dass es erfindungsgemäß vorgesehen ist, dass der betreffende Interaktionsmodus solange aufrechterhalten wird, solange kein Abschluss der Steuerung der Anzeigeeinrichtung ermittelt worden ist, kann ein unerwünschtes Umschalten bzw. Deaktivieren des betreffenden Interaktionsmodus bei der gerade von dem Nutzer blickrichtungsgesteuert aktivierten Anzeigeeinrichtung unterbunden werden.

Bei dem erfindungsgemäßen Verfahren wird nicht alleine die Anzeigeeinrichtung selbst gesteuert. Die Anzeigeeinrichtung dient als Benutzerschnitte für eine oder mehrere unterschiedliche Funktionen des Kraftwagens, beispielsweise in Form eines Bordcomputers, einer Navigationseinrichtung, eines Radios oder dergleichen. Der Fahrer kann also in dem Interaktionsmodus, sofern er aktiviert ist, die Bedieneinrichtung zum Steuern jeweiliger Fahrzeugfunktionen über die Anzeigeeinrichtung verwenden, wobei die Anzeigeeinrichtung die Steuermöglichkeiten und die gegebenenfalls durchgeführten Steuerungen visualisiert.

In vorteilhafter Ausgestaltung der Erfindung ist es vorgesehen, dass die Überwachung, ob eine Steuerung der Anzeigeeinrichtung abgeschlossen worden ist, erst erfolgt, sobald eine Blickabkehr des Fahrzeuginsassen von dem Anzeigebereich der Anzeigeeinrichtung erfasst worden ist. Denn solange erfasst wird, dass der Fahrzeuginsasse seinen Blick nach wie vor auf den Anzeigebereich der betreffenden Anzeigeeinrichtung gerichtet hat, kann davon ausgegangen werden, dass der Fahrzeuginsasse mit ziemlicher Sicherheit auch eine Interaktion mit der Anzeigeeinrichtung wünscht. Dadurch, dass die Überwachung, ob eine Steuerung der Anzeigeeinrichtung abgeschlossen worden ist, erst erfolgt, sobald eine Blickabkehr des Fahrzeuginsassen erfasst worden ist, kann der Überwachungsaufwand entsprechend verringert werden.

Eine weitere vorteilhafte Ausführungsform der Erfindung sieht vor, dass der Interaktionsmodus der Anzeigeeinrichtung beendet wird, sobald der weitere Interaktionsmodus der weiteren Anzeigeeinrichtung aktiviert wird. Somit wird also immer nur für eine Anzeigeeinrichtung der betreffende Interaktionsmodus aktiviert bzw. aktiviert gehalten, so dass es zu keinen unnötigen Verwirrungen des Fahrzeuginsassen bei der Bedienung der unterschiedlichen Anzeigeeinrichtungen kommt. Eine Mehrfachbedienbarkeit von mehreren Anzeigeeinrichtungen wird also unterbunden.

Gemäß einer weiteren vorteilhaften Ausführungsform der Erfindung ist es vorgesehen, dass zur Bestimmung, ob die Steuerung der Anzeigeeinrichtung oder der weiteren Anzeigeeinrichtungen abgeschlossen worden ist, erfasst wird, ob die Bedieneinrichtung noch betätigt wird. Somit kann auf einfache und zuverlässige Weise ermittelt werden, ob der Fahrzeuginsasse die Steuerung der betreffenden Anzeigeeinrichtung schon abgeschlossen hat.

In weiterer vorteilhafter Ausgestaltung der Erfindung ist vorgesehen, dass falls mittels der Anzeigeeinrichtung oder der weiteren Anzeigeeinrichtungen mehrere auswählbare Optionen angezeigt werden, zur Bestimmung, ob die Steuerung der Anzeigeeinrichtung oder der weiteren Anzeigeeinrichtungen abgeschlossen worden ist, erfasst wird, ob nach der Aktivierung des Interaktionsmodus eine der Optionen ausgewählt worden ist. Beispielsweise kann mittels der Anzeigeeinrichtung eine Mehrzahl von unterschiedlichen Radiostationen angezeigt werden, zwischen welchen der Fahrzeuginsasse wählen und entsprechend eine bislang noch nicht aktivierte Radiostation auswählen kann. In dem besagten Beispiel wird solange noch nicht von einem Abschluss der Steuerung bzw. Ansteuerung der Anzeigeeinrichtung ausgegangen, solange keine zuvor noch nicht ausgewählte Radiostation durch den Fahrzeuginsassen ausgewählt worden ist. Dadurch kann auf besonders zuverlässige Weise ermittelt werden, ob die Steuerung der betreffenden Anzeigeeinrichtung durch den Fahrzeuginsassen abgeschlossen worden ist, da üblicherweise mit einer entsprechenden Auswahl durch den Fahrzeuginsassen zu rechnen ist, falls er mittels der Anzeigeeinrichtung mehrere auswählbare Optionen angezeigt bekommt.

Eine weitere vorteilhafte Ausführungsform der Erfindung sieht vor, dass zur Bestimmung, ob die Steuerung der Anzeigeeinrichtung oder der weiteren Anzeigeeinrichtungen abgeschlossen worden ist, erfasst wird, ob eine Betätigung der Bedieneinrichtung für eine vorgegebene Dauer unterblieben ist. Insbesondere wenn mittels der Anzeigeeinrichtung Inhalte angezeigt werden, anhand derer nur schwer zu beurteilen ist, ob der Fahrzeuginsasse gerade eine Steuerung der Anzeigeeinrichtung abgeschlossen hat, beispielsweise wenn ein Kartenausschnitt eines Navigationssystems angezeigt wird, in welchen der Fahrzeuginsasse beispielsweise hinein oder heraus zoomen könnte, bietet es sich an, dass auf einen voraussichtlichen Abschluss der Steuerungshandlung der betreffenden Anzeigeeinrichtung geschlossen wird, falls eine Betätigung der Bedieneinrichtung für die vorgegeben Dauer unterblieben ist.

In weiterer vorteilhafter Ausgestaltung der Erfindung ist es vorgesehen, dass die Dauer in Abhängigkeit von einem mittels der Anzeigeeinrichtung angezeigten Inhalt vorgegeben wird. Sollten beispielsweise relativ komplexe Inhalte mittels der Anzeigeeinrichtung angezeigt werden, welche eine gewissen Erfassungsdauer bedürfen, bis der Fahrzeuginsasse den Inhalt vollständig wahrgenommen bzw. erfasst hat, bietet es sich an, die Dauer länger einzustellen, nach deren Unterbleiben einer Betätigung der Bedieneinrichtung auf einen Abschluss der Steuerungshandlung bezüglich der Anzeigeeinrichtung geschlossen wird und umgekehrt. Dadurch kann eine besonders zuverlässige Aussage hinsichtlich des Abschlusses einer Steuerungshandlung der betreffenden Anzeigeeinrichtung erzielt werden.

Das erfindungsgemäße System zum Betreiben wenigstens einer Anzeigeeinrichtung eines Kraftwagens umfasst eine Blickerfassungseinrichtung, welche dazu ausgelegt ist, eine Blickrichtung eines Fahrzeuginsassen des Kraftwagens zu erfassen und anhand der erfassten Blickrichtung zu überprüfen, ob der Fahrzeuginsassen für zumindest eine vorgegebene Blickzuwendungsdauer auf einen Anzeigebereich der Anzeigeeinrichtung gerichtet hat. Das System umfasst des Weiteren eine Steuereinrichtung, welche dazu ausgelegt ist, bei einer festgestellten Blickzuwendung des Fahrzeuginsassen für zumindest die vorgegebene Blickzuwendungsdauer auf den Anzeigebereich der Anzeigeeinrichtung einen Interaktionsmodus zu aktivieren, bei welchem eine Bedieneinrichtung des Systems zum Steuern der Anzeigeeinrichtung aktiviert ist. Das erfindungsgemäße System zeichnet sich dadurch aus, dass die Steuereinrichtung dazu ausgelegt ist, nach der Aktivierung des Interaktionsmodus anhand wenigstens eines vorbestimmten Kriteriums zu ermitteln, ob eine Steuerung der Anzeigeeinrichtung abgeschlossen worden ist. Die Steuereinrichtung ist des Weiteren dazu ausgelegt, den Interaktionsmodus solange aufrechtzuerhalten, wie kein Abschluss der Steuerung der Anzeigeeinrichtung ermittelt oder zumindest ein anderes vorbestimmtes Kriterium noch nicht erfüllt worden ist. Vorteilhafte Ausgestaltungen des erfindungsgemäßen Verfahrens sind als vorteilhafte Ausgestaltungen des Systems anzusehen, wobei das System insbesondere Mittel zur Durchführung der Verfahrensschritte umfasst.

Der erfindungsgemäße Kraftwagen umfasst ein erfindungsgemäßes System zum Betreiben wenigstens einer Anzeigeeinrichtung.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar, ohne den Rahmen der Erfindung zu verlassen.

Die Zeichnung zeigt in:
- Fig. 1: eine schematische Darstellung eines Kraftwagens mit einem System zum blickrichtungsabhängigen Betreiben von drei Anzeigeeinrichtungen des Kraftwagens;
- Fig. 2: eine Perspektivansicht auf ein teilweise dargestelltes Cockpit des Kraftwagens, wobei die Anzeigeeinrichtungen als Kombiinstrument, als Head-up-Display bzw. als Display oberhalb einer Mittelkonsole des Kraftwagens ausgebildet sind; und in
- Fig. 3: eine vergrößerte Darstellung des Kombiinstruments des Kraftwagens, wobei in dessen Anzeigebereich eine Mehrzahl von unterschiedlichen TV-Sendern angezeigt werden.

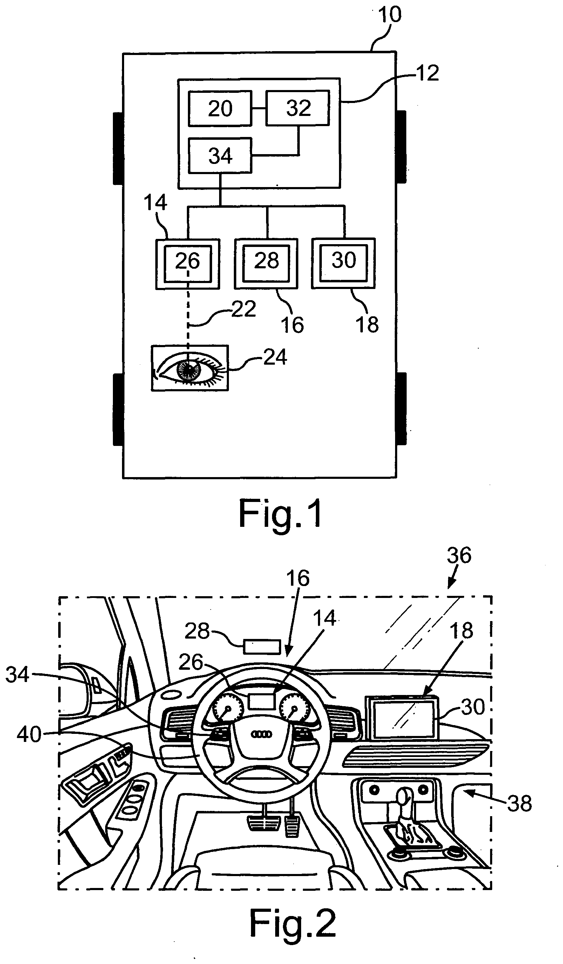

Ein Kraftwagen 10 mit einem System 12 zum blickrichtungsabhängigen Betreiben mehrerer Anzeigeeinrichtungen 14, 16, 18 ist in einer schematischen Darstellung in Fig. 1 gezeigt. Das System 12 umfasst eine Blickerfassungseinrichtung 20, welche dazu ausgelegt ist, eine mit der gestrichelten Linie 22 gekennzeichnete Blickrichtung eines Fahrzeuginsassen 24 des Kraftwagens 10 zu erfassen und anhand der erfassten Blickrichtung 22 zu überprüfen, ob der Fahrzeuginsasse 24 seinen Blick für zumindest eine vorgegebene Blickzuwendungsdauer auf einen der Anzeigebereiche 26, 28 ,30 der jeweiligen Anzeigeeinrichtungen 14, 16, 18 gerichtet hat.

Das System 12 umfasst des Weiteren eine Steuereinrichtung 32, welche dazu ausgelegt ist, bei einer festgestellten Blickzuwendung des Fahrzeuginsassen 24 für zumindest die vorgegebene Blickzuwendungsdauer auf einen der Anzeigebereiche 26, 28, 30 einen Interaktionsmodus zu aktivieren, bei welchem eine Bedieneinrichtung 34 des Systems 12 zum Steuern der betreffenden Anzeigeeinrichtung 14, 16, 18 aktiviert ist. Die Steuereinrichtung 32 ist dabei mit der Blickerfassungseinrichtung 20 gekoppelt, so dass ein entsprechender Informationsfluss von der Blickerfassungseinrichtung 20 zu der Steuereinrichtung 32 gewährleistet ist.

Die Steuereinrichtung 32 ist dazu ausgelegt, nach der Aktivierung des betreffenden Interaktionsmodus anhand wenigstens eines vorbestimmten Kriteriums zu ermitteln, ob eine Steuerung der entsprechenden Anzeigeeinrichtung 14, 16, 18 abgeschlossen worden ist. Die Steuereinrichtung 34 ist dazu ausgelegt, den betreffenden Interaktionsmodus solange aufrechtzuerhalten, wie kein Abschluss der Steuerung der entsprechenden Anzeigeeinrichtung 14, 16, 18 ermittelt oder zumindest ein anders vorbestimmtes Kriterium erfüllt worden ist.

In Fig. 2 ist ein Cockpit 36 des Kraftwagens 10 ausschnittsweise dargestellt. Im vorliegend gezeigten Fall ist die Anzeigeeinrichtung 14 als Kombiinstrument ausgebildet, die Anzeigeeinrichtung 16 als Head-up-Display und die Anzeigeeinrichtung 18 als Display, welches oberhalb einer Mittelkonsole 38 des Kraftwagens 10 angeordnet ist.

Nachfolgend wird ein Verfahren zum blickrichtungsabhängigen Betreiben der Anzeigeeinrichtungen 14, 16, 18 näher erläutert. Mittels der Blickerfassungseinrichtung 20 wird fortlaufend die Blickrichtung 22 des Fahrzeuginsassen 24 erfasst. Anhand der erfassten Blickrichtung 22 wird überprüft, ob der Fahrzeuginsasse 24 seinen Blick für zumindest eine vorgegebene Blickzuwendungsdauer, beispielsweise eine Sekunde, zwei Sekunden oder dergleichen, auf einen der Anzeigebereiche 26, 28, 30 der Anzeigeeinrichtungen 14, 16, 18 gerichtet hat.

Falls der Blick für zumindest die vorgegebe Blickzuwendungsdauer auf einen der Anzeigebereiche 26, 28, 30 gerichtet worden ist, wird durch die Steuereinheit 32 ein entsprechender Interaktionsmodus aktiviert, bei welchem die Bedieneinrichtung 34 zum Steuern der betreffenden Anzeigeeinrichtung 14, 16, 18 aktiviert ist.

Im vorliegend gezeigten Fall ist die Bedieneinrichtung 34 als walzenförmiges Element ausgebildet, welches an einem Lenkrad 40 des Kraftwagens 10 angeordnet ist. Vorliegend handelt es sich also bei dem Fahrzeuginsassen 24 um einen Fahrer des Kraftwagens 10, welcher ohne seine Hände vom Lenkrad 44 nehmen zu müssen, blickrichtungsgesteuert die unterschiedlichen Anzeigeeinrichtungen 14, 16, 18 mittels der Bedieneinrichtung 34 bedienen kann, sobald die betreffende Anzeigeeinrichtung 14, 16, 18 in den besagten Interaktionsmodus versetzt worden ist.

Nachfolgend wird zunächst davon ausgegangen, dass der Fahrzeuginsasse 24 seinen Blick entsprechend lange genug auf den Anzeigebereich 26 des Kombünstruments 14 gerichtet hat. Folglich wird der entsprechende Interaktionsmodus für das Kombünstrument 14 aktiviert, in welchem der Fahrzeuginsasse 24 durch eine entsprechende Betätigung bzw. Bedienung der Bedieneinrichtung 34 das Kombünstrument 14 steuern kann.

Nach der Aktivierung des Interaktionsmodus für das Kombünstrument 14 wird fortlaufend ermittelt, ob eine Steuerung des Kombünstruments 14 abgeschlossen worden ist. Solang kein Abschluss der Steuerung des Kombiinstruments 14 ermittelt worden ist, oder ein weiteres Kriterium, auf welches im nachfolgenden noch eingegangen wird, erfüllt worden ist, wird der Interaktionsmodus für das Kombünstrument 14 aufrechterhalten.

Die Überwachung, ob eine Steuerung des Kombünstruments 14 abgeschlossen worden ist, erfolgt erst, sobald eine Blickabkehr des Fahrzeuginsassen 24 von dem Anzeigebereich 26 des Kombiinstruments 14 erfasst worden ist. Denn solange der Fahrzeuginsasse 24 seinen Blick ohnehin auf den Anzeigebereich 26 des Kombünstruments 14 gerichtet hat, wird davon ausgegangen, dass der Fahrzeuginsasse 24 nach wie vor mit dem Kombiinstrument 14 interagieren möchte.

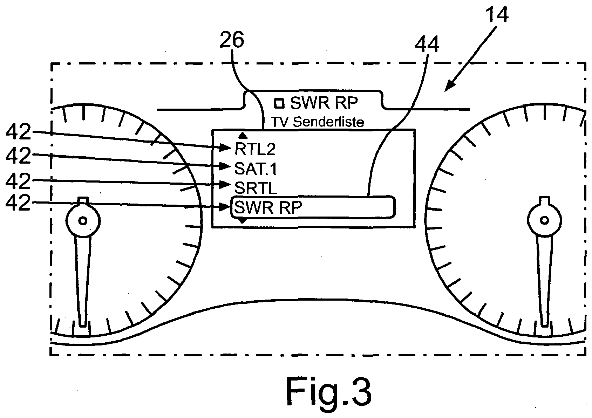

In Fig. 3 ist das Kombünstruments 14 in einer vergrößerten Darstellung gezeigt, wobei eine Mehrzahl von auswählbaren Optionen 42 in Form jeweiliger TV-Sender angezeigt werden. Der Fahrzeuginsasse 24 kann während des aktivierten Interaktionsmodus durch eine entsprechende Betätigung der Bedieneinrichtung 34 zwischen den unterschiedlichen Optionen 42 wechseln, wobei im vorliegend gezeigten Fall gerade der TV-Sender "SWR RP" ausgewählt ist, was durch die Umrandung 44 kenntlich gemacht ist. Zur Bestimmung, ob die Steuerung des Kombiinstruments 14 durch den Fahrzeuginsassen 24 abgeschlossen ist, wird im vorliegenden Fall erfasst, ob nach der Aktivierung des Interaktionsmodus eine der Optionen 42 ausgewählt worden ist. Konkret heißt dies, dass solange der Fahrzeuginsasse 24 den bislang ausgewählten Sender "SWR RP" nicht gewechselt hat, wird davon ausgegangen, dass die Steuerung des Kombünstruments 14 noch nicht abgeschlossen worden ist.

Des Weiteren wird zur Bestimmung, ob die Steuerung des Kombiinstruments 14 abgeschlossen worden ist, erfasst, ob eine Betätigung der Bedieneinrichtung 34 für eine vorgegeben Dauer, beispielsweise fünf Sekunden, zehn Sekunden oder dergleichen, unterblieben ist. Denn sollte der Fahrzeuginsasse 24 beispielsweise keinen anderen Sender in Form der Optionen 42 auswählen, und dies innerhalb der vorgegeben Dauer nach der Aktivierung des Interaktionsmodus auch nicht tun, wird dann davon ausgegangen, dass die Steuerung des Kombünstruments 14 nun beendet sein sollte.

Statt wie im hier gezeigten Fall, könnten mittels des Kombünstruments 14 auch komplexere Inhalte als eine TV-Senderliste angezeigt werden, beispielsweise unterschiedliche Navigationsinhalte, Bordcomputerinhalte oder dergleichen, wobei die entsprechende vorgegebene Dauer, während welcher eine Betätigung der Bedieneinrichtung 34 unterblieben sein muss, bis von einer Beendigung der Steuerung des Kombünstruments 14 ausgegangen wird, in Abhängigkeit von dem gerade angezeigten Inhalten oder deren Komplexität vorgegeben wird.

Blickt der Fahrzeuginsasse 24 noch während des aktivierten Interaktionsmodus für das Kombiinstruments 14 nun beispielsweise auf den Anzeigebereich 28 des Head-up-Displays 16, wird ein entsprechend weiterer Interaktionsmodus, bei welchem die Bedieneinrichtung 34 oder auch eine andere Bedieneinrichtung zum Steuern des Head-up-Displays 16 aktiviert ist, bei einer erfassten Blickzuwendung des Fahrzeuginsassen 24 für eine vorgegebene Blickzuwendungsdauer zu dem Anzeigebereich 28 des Head-up-Displays 16 unterbunden, solange kein Abschluss der Steuerung des Kombiinstruments 14 erfasst worden ist.

Alternativ ist es auch möglich, dass bei einer entsprechend langen Fokussierung des Anzeigebereichs 28 des Head-up-Displays 16 zumindest eine Aufschaltung bzw. Aktivierung eines entsprechenden Interaktionsmodus, in welchem der Fahrzeuginsasse 24 mittels der Bedieneinrichtung 34 das Head-up-Display 16 ansteuern kann, um eine vorgegeben Dauer, beispielsweise 5 Sekunden, 10 Sekunden oder dergleichen, verzögert, solange kein Abschluss der Steuerung des Kombünstruments 14 erfasst worden ist.

Genauso verhält es sich mit dem über dem Bereich der Mittelkonsole 38 angeordneten Display 18, welches in einen entsprechenden Interaktionsmodus versetzt werden kann, sobald erfasst worden ist, dass der Fahrzeuginsasse 24 den Anzeigebereich 30 des Displays 18 zumindest für die vorgegebene Blickzuwendungsdauer fokussiert hat. Eine Aktivierung eines entsprechenden Interaktionsmodus, in welchem der Fahrzeuginsasse 24 mit dem Display 18 interagieren kann, kann ebenfalls entsprechend verzögert oder auch unterbunden werden, solange kein Abschluss einer Bedienhandlung bzw. Steuerung des Kombünstruments 14 erfasst worden ist.

Sobald ein Interaktionsmodus für eine der Anzeigeeinrichtungen 14, 16, 18 aktiviert wird, wird der zuvor aktivierte Interaktionsmodus von einem der anderen Anzeigeeinrichtungen 14, 16, 18 deaktiviert. Mit anderen Worten kann der Fahrzeuginsasse 24 also immer nur mit einer der Anzeigeeinrichtungen 14, 16, 18 durch eine entsprechende Betätigung der Bedieneinrichtung 34 interagieren.

In den besagten Interaktionsmodi erfolgt dabei nicht rein eine Ansteuerung der Anzeigeeinrichtungen 14, 16, 18 und eine entsprechende Veränderung oder Manipulation angezeigter Inhalte. Vielmehr dienen die Anzeigeeinrichtungen 14, 16, 18 als graphische Benutzerschnittstellen, über welche der Fahrzeuginsasse 24 durch eine entsprechende Betätigung bzw. Ansteuerung der Bedieneinrichtung 34 auf unterschiedlichste Fahrzeugfunktionen, wie beispielsweise ein Radio, eine Navigationseinrichtung, ein Bordcomputer zugreifen kann.

## Patentansprüche

1. Verfahren zum Betreiben wenigstens einer Anzeigeeinrichtung (14) eines Kraftwagens (10), mit den Schritten:
- Erfassen einer Blickrichtung (22) eines Fahrzeuginsassen (24) des Kraftwagens (10);
- Überprüfen anhand der erfassten Blickrichtung (22), ob der Fahrzeuginsasse (24) seinen Blick für zumindest eine vorgegebene Blickzuwendungsdauer auf einen Anzeigebereich (26) der Anzeigeeinrichtung (14) gerichtet hat;
- falls der Blick für zumindest die vorgegebene Blickzuwendungsdauer auf den Anzeigebereich (26) der Anzeigeeinrichtung (14) gerichtet worden ist: Aktivieren eines Interaktionsmodus, bei welchem eine Bedieneinrichtung (34) zum Steuern der Anzeigeeinrichtung (14) aktiviert ist;
**dadurch gekennzeichnet, dass**
- nach der Aktivierung des Interaktionsmodus anhand wenigstens eines vorbestimmten Kriteriums ermittelt wird, ob eine Steuerung der Anzeigeeinrichtung (14) abgeschlossen worden ist;
- solange kein Abschluss der Steuerung der Anzeigeeinrichtung (14) ermittelt oder zumindest ein anderes vorbestimmtes Kriterium noch nicht erfüllt worden ist, der Interaktionsmodus aufrechterhalten wird;
- eine Aktivierung eines weiteren Interaktionsmodus, bei welchem die Bedieneinrichtung (34) oder eine andere Bedieneinrichtung zum Steuern einer weiteren Anzeigeeinrichtung (16, 18) aktiviert ist, nach einer erfassten Blickzuwendung des Fahrzeuginsassen (24) für eine vorgegebene Blickzuwendungsdauer zu einem Anzeigbereich (28, 30) der weiteren Anzeigeeinrichtung (16, 18) um eine vorgegebene Dauer verzögert wird, falls kein Abschluss der Steuerung der Anzeigeeinrichtung (14) erfasst worden ist.

2. Verfahren nach Anspruch 1,
**dadurch gekennzeichnet, dass**
die Überwachung, ob eine Steuerung der Anzeigeeinrichtung (14) abgeschlossen worden ist, erst erfolgt, sobald eine Blickabkehr des Fahrzeuginsassen (24) von dem Anzeigebereich (26) der Anzeigeeinrichtung (14) erfasst worden ist.

3. Verfahren nach Anspruch 1 oder 2,
**dadurch gekennzeichnet, dass**
der Interaktionsmodus der Anzeigeeinrichtung (14) beendet wird, sobald der weitere Interaktionsmodus der weiteren Anzeigeeinrichtung (16, 18) aktiviert wird.

4. Verfahren nach einem der vorhergehenden Ansprüche,
**dadurch gekennzeichnet, dass**
zur Bestimmung, ob die Steuerung der Anzeigeeinrichtung (14) oder der weiteren Anzeigeeinrichtungen (16, 18) abgeschlossen worden ist, erfasst wird, ob die Bedieneinrichtung (34) noch betätigt wird.

5. Verfahren nach einem der vorhergehenden Ansprüche,
**dadurch gekennzeichnet, dass**
falls mittels der Anzeigeeinrichtung (14) oder der weiteren Anzeigeeinrichtungen (16, 18) mehrere auswählbare Optionen (42) angezeigt werden, zur Bestimmung, ob die Steuerung der Anzeigeeinrichtung (14) der weiteren Anzeigeeinrichtungen (16, 18) abgeschlossen worden ist, erfasst wird, ob nach der Aktivierung des Interaktionsmodus eine der Optionen (42) ausgewählt worden ist.

6. Verfahren nach einem der vorhergehenden Ansprüche,
**dadurch gekennzeichnet, dass**
zur Bestimmung, ob die Steuerung der Anzeigeeinrichtung (14) oder der weiteren Anzeigeeinrichtungen (16, 18) abgeschlossen worden ist, erfasst wird, ob eine Betätigung der Bedieneinrichtung (34) für eine vorgegebene Dauer unterblieben ist.

7. Verfahren nach Anspruch 6,
**dadurch gekennzeichnet, dass**
die Dauer in Abhängigkeit von einem mittels der Anzeigeeinrichtung (14) oder der weiteren Anzeigeeinrichtungen (16, 18) angezeigten Inhalts vorgegeben wird.

8. System (12) zum Betreiben wenigstens einer Anzeigeeinrichtung (14) eines Kraftwagens (10), mit:
- einer Blickerfassungseinrichtung (20), welche dazu ausgelegt ist, eine Blickrichtung (22) eines Fahrzeuginsassen (24) des Kraftwagens (10) zu erfassen und anhand der erfassten Blickrichtung (22) zu überprüfen, ob der Fahrzeuginsasse (24) seinen Blick für zumindest eine vorgegebene Blickzuwendungsdauer auf einen Anzeigebereich (26) der Anzeigeeinrichtung (14) gerichtet hat;
- einer Steuereinrichtung (32), welche dazu ausgelegt ist, bei einer festgestellten Blickzuwendung des Fahrzeuginsassen (24) für zumindest die vorgegebene Blickzuwendungsdauer auf den Anzeigebereich (26) der Anzeigeeinrichtung (14) einen Interaktionsmodus zu aktivieren, bei welchem eine Bedieneinrichtung (34) des Systems (12) zum Steuern der Anzeigeeinrichtung (14) aktiviert ist;
**dadurch gekennzeichnet, dass**
- die Steuereinrichtung (32) dazu ausgelegt ist, nach der Aktivierung des Interaktionsmodus anhand wenigstens eines vorbestimmten Kriteriums zu ermitteln, ob eine Steuerung der Anzeigeeinrichtung (14) abgeschlossen worden ist;
- die Steuereinrichtung (32) dazu ausgelegt ist, den Interaktionsmodus solange aufrechtzuerhalten, wie kein Abschluss der Steuerung der Anzeigeeinrichtung (14) ermittelt oder zumindest ein anderes vorbestimmtes Kriterium noch nicht erfüllt worden ist;
- die Steuereinrichtung (32) dazu ausgelegt ist, eine Aktivierung eines weiteren Interaktionsmodus, bei welchem die Bedieneinrichtung (34) oder eine andere Bedieneinrichtung zum Steuern einer weiteren Anzeigeeinrichtung (16, 18) aktiviert ist, nach einer erfassten Blickzuwendung des Fahrzeuginsassen (24) für eine vorgegebene Blickzuwendungsdauer zu einem Anzeigbereich (28, 30) der weiteren Anzeigeeinrichtung (16, 18) um eine vorgegebene Dauer zu verzögern, falls kein Abschluss der Steuerung der Anzeigeeinrichtung (14) erfasst worden ist.

9. Kraftwagen mit einem System nach Anspruch 8.

## Claims

1. Method for operating at least one display device (14) of a motor vehicle (10), with the steps:
- detecting a viewing direction (22) of a vehicle occupant (24) of the motor vehicle (10);
- verifying, based on the detected viewing direction (22), whether the vehicle occupant (24) has directed his view for at least a predetermined viewing duration at a display region (26) of the display device (14);
- if the view has been directed for at least the predetermined viewing duration at the display region (26) of the display device (14): activating an interaction mode in which an operating device (34) for controlling the display device (14) is activated;
**characterised in that**
- after activating the interaction mode based on at least one predetermined criterion, it is determined whether a control of the display device (14) has been completed;
- as long as no completion of the control of the display device (14) has been determined or at least one other predetermined criterion has not yet been fulfilled, the interaction mode is maintained;
- activating a further interaction mode, in which the operating device (34) or another operating device is activated to control a further display device (16, 18), after detected viewing of the vehicle occupant (24) for a predetermined viewing duration at a display region (28, 30) of the further display device (16, 18) is delayed by a predetermined duration, if no completion of the control of the display device (14) has been detected.

2. Method according to claim 1,
**characterised in that**
the monitoring of whether a control of the display device (14) has been completed only takes place as soon as the vehicle occupant (24) has been detected looking away from the display region (26) of the display device (14).

3. Method according to claim 1 or 2,
**characterised in that**
the interaction mode of the display device (14) is ended as soon as the further interaction mode of the further display device (16, 18) is activated.

4. Method according to any one of the preceding claims,
**characterised in that**
in order to determine whether the control of the display device (14) or the further display devices (16, 18) has been completed, it is determined whether the operating device (34) is still actuated.

5. Method according to any one of the preceding claims,
**characterised in that**
if a plurality of selectable options (42) are shown by means of the display device (14) or the further display devices (16, 18) in order to determine whether the control of the display device (14) of the further display devices (16, 18) has been completed, it is determined whether one of the options (42) has been selected after activating the interaction mode.

6. Method according to any one of the preceding claims,
**characterised in that**
in order to determine whether the control of the display device (14) or the further display devices (16, 18) has been completed, it is determined whether an actuation of the operating device (34) is stopped for a predetermined duration.

7. Method according to claim 6,
**characterised in that**
the duration is predetermined as a function of a content displayed by means of the display device (14) or the further display devices (16, 18).

8. System (12) for operating at least one display device (14) of a motor vehicle (10), with
- a view detection device (20) is configured to detect a viewing direction (22) of a vehicle occupant (24) of the motor vehicle (10) and to verify based on the detected viewing direction (22) whether the vehicle occupant (24) has directed his view for at least a predetermined viewing duration at a display region (26) of the display device (14).
- a control device (32) is configured to activate an interaction mode when the view of the vehicle occupant (24) is detected for at least the predetermined viewing duration at the display region (26) of the display device (14), in said interaction mode an operating device (34) of the system (12) is activated to control the display device (14);
**characterised in that**
- the control device (32) is configured, following the activation of the interaction mode based on at least one predetermined criterion to determine whether the control of the display device (14) has been completed;
- the control device (32) is configured to maintain the interaction mode as long as no completion of the control of the display device (14) is determined or at least one other predetermined criterion has not yet been fulfilled;
- the control device (32) is configured to delay by a predetermined duration an activation of a further interaction mode, in which the operating device (34) or another operating device is activated to control a further display device (16, 18), after detected viewing of the vehicle occupant (24) for a predetermined viewing duration at a display region (28, 30) of the further display device (16, 18), if no completion of the control of the display device (14) has been determined.

9. Motor vehicle with a system according to claim 8.

## Revendications

1. Procédé de fonctionnement d'au moins un dispositif d'affichage (14) d'un véhicule à moteur (10), avec les étapes :
- détection d'une direction de regard (22) d'un occupant de véhicule (24) du véhicule à moteur (10) ;
- vérification à l'aide de la direction de regard (22) détectée si l'occupant de véhicule (24) a dirigé son regard sur une zone d'affichage (26) du dispositif d'affichage (14) pendant au moins une durée de regard prédéterminée ;
- si le regard a été dirigé sur la zone d'affichage (26) du dispositif d'affichage (14) pendant au moins la durée de regard prédéterminée : activation d'un mode d'interaction dans lequel un dispositif de commande (34) est activé en vue de la commande du dispositif d'affichage (14) ;
**caractérisé en ce que**
- après l'activation du mode d'interaction, on détermine à l'aide d'au moins un critère prédéterminé si une commande du dispositif d'affichage (14) a été terminée ;
- tant qu'aucune fin de la commande du dispositif d'affichage (14) n'a été déterminée ou qu'au moins un autre critère prédéterminé n'a pas encore été satisfait, le mode d'interaction est conservé ;
- une activation d'un autre mode d'interaction, dans lequel le dispositif de commande (34) ou un autre dispositif de commande destiné à la commande d'un autre dispositif d'affichage (16, 18) est activé, après un regard détecté de l'occupant de véhicule (24) sur une zone d'affichage (28, 30) de l'autre dispositif d'affichage (16, 18) pendant une durée de regard prédéterminée est retardée d'une durée prédéterminée si aucune fin de la commande du dispositif d'affichage (14) n'a été détectée.

2. Procédé selon la revendication 1, **caractérisé en ce que** la surveillance pour savoir si une commande du dispositif d'affichage (14) a été terminée s'effectue seulement dès qu'un détournement de regard de l'occupant de véhicule (24) de la zone d'affichage (26) du dispositif d'affichage (14) a été détecté.

3. Procédé selon la revendication 1 ou 2, **caractérisé en ce que** l'on met fin au mode d'interaction du dispositif d'affichage (14) dès que l'autre mode d'interaction de l'autre dispositif d'affichage (16, 18) est activé.

4. Procédé selon l'une quelconque des revendications précédentes, **caractérisé en ce que**, pour déterminer si la commande du dispositif d'affichage (14) ou des autres dispositifs d'affichage (16, 18) a été terminée, on détecte si le dispositif de commande (34) est encore actif.

5. Procédé selon l'une quelconque des revendications précédentes, **caractérisé en ce que**, si plusieurs options sélectionnables (42) sont affichées au moyen du dispositif d'affichage (14) ou des autres dispositifs d'affichage (16, 18), pour déterminer si la commande du dispositif d'affichage (14) ou des autres dispositifs d'affichage (16, 18) a été terminée, on détecte si l'une des options (42) a été sélectionnée après l'activation du mode d'interaction.

6. Procédé selon l'une quelconque des revendications précédentes, **caractérisé en ce que**, pour déterminer si la commande du dispositif d'affichage (14) ou des autres dispositifs d'affichage (16, 18) a été terminée, on détecte si un actionnement du dispositif de commande (34) pendant une durée prédéterminée n'a pas eu lieu.

7. Procédé selon la revendication 6, **caractérisé en ce que** la durée est prédéterminée en fonction d'un contenu affiché au moyen du dispositif d'affichage (14) ou des autres dispositifs d'affichage (16, 18).

8. Système (12) pour faire fonctionner au moins un dispositif d'affichage (14) d'un véhicule à moteur (10), avec :
- un dispositif de détection de regard (20) qui est conçu pour détecter une direction de regard (22) d'un occupant de véhicule (24) du véhicule à moteur (10) et pour vérifier à l'aide de la direction de regard (22) détectée si l'occupant de véhicule (24) a dirigé son regard sur une zone d'affichage (26) du dispositif d'affichage (14) pendant au moins une durée de regard prédéterminée ;
- un dispositif de commande (32) qui est conçu pour, dans le cas d'un regard détecté de l'occupant de véhicule (24) sur la zone d'affichage (26) du dispositif d'affichage (14) pendant au moins la durée de regard prédéterminée, activer un mode d'interaction dans lequel un dispositif de commande (34) du système (12) est activé en vue de la commande du dispositif d'affichage (14) ;
**caractérisé en ce que**
- le dispositif de commande (32) est conçu pour, après l'activation du mode d'interaction, déterminer à l'aide d'au moins un critère prédéterminé si une commande du dispositif d'affichage (14) a été terminée ;
- le dispositif de commande (32) est conçu pour conserver le mode d'interaction tant qu'aucune fin de la commande du dispositif d'affichage (14) n'a été déterminée ou qu'au moins un autre critère prédéterminé n'a pas encore été satisfait ;
- le dispositif de commande (32) est conçu pour retarder d'une durée prédéterminée une activation d'un autre mode d'interaction, dans lequel le dispositif de commande (34) ou un autre dispositif de commande destiné à la commande d'un autre dispositif d'affichage (16, 18) est activé, après un regard détecté de l'occupant de véhicule (24) sur une zone d'affichage (28, 30) de l'autre dispositif d'affichage (16, 18) pendant une durée de regard prédéterminée si aucune fin de la commande du dispositif d'affichage (14) n'a été détectée.

9. Véhicule à moteur avec un système selon la revendication 8.
